# EUROPÄISCHE PATENTSCHRIFT

(11) **EP 1 714 011 B1**
(45) Veröffentlichungstag und Bekanntmachung des Hinweises auf die Patenterteilung: **04.08.2010**
(21) Anmeldenummer: 04802769.2
(22) Anmeldetag: 19.11.2004
(51) Int. Cl.: F01N 3/28, F01N 3/20, B01F 5/04

(54) **VERFAHREN UND VORRICHTUNG ZUR NACHBEHANDLUNG EINES ABGASES EINER VERBRENNUNGSMASCHINE**
METHOD AND DEVICE FOR POST TREATING WASTE GAS OF AN INTERNAL COMBUSTION ENGINE
PROCEDE ET DISPOSITIF DE TRAITEMENT POSTERIEUR DE GAZ D'ECHAPPEMENT D'UN MOTEUR A COMBUSTION INTERNE

(30) Priorität: 30.01.2004 DE 102004004738
(43) Veröffentlichungstag der Anmeldung: 25.10.2006
(73) Patentinhaber: ROBERT BOSCH GMBH, 70442 Stuttgart (DE)
(72) Erfinder: MEINGAST, Ulrich, 70469 Stuttgart (DE); DEHN, Johannes, 21502 Suzhou (CN); EGGERT, Torsten, 70839 Gerlingen (DE)
(86) Internationale Anmeldenummer: PCT/DE2004/002556
(87) Internationale Veröffentlichungsnummer: WO 2005/073524

(56) Entgegenhaltungen:
- EP-A- 0 555 746
- DE-A1- 10 131 803
- DE-A1- 19 934 413
- FR-A- 2 384 206

## Beschreibung

Die Erfindung betrifft ein Verfahren und eine Vorrichtung zur Nachbehandlung eines Abgases einer Verbrennungsmaschine mit den Merkmalen des Anspruchs 1.

### Stand der Technik

DE 102 48 586 A zeigt eine Vorrichtung mit einem Aufprallmittel. Das Aufprallmittel hat eine geringe Wärmekapazität.

Vorrichtungen der eingangs genannten Art, mit denen eine mit dem Abgas einer Verbrennungsmaschine zu mischende Substanz in dosierten Mengen in eine vom Abgas durchströmte Abgasleitung gesprüht wird, sind zu zwei verschiedenen Zwecken bekannt.

Zum einen wird eine Harnstoff-Wasser-Lösung (HWL) in das Abgas von Dieselmotoren eingedüst, um den Anteil der Stickoxide (NOₓ) im Abgas zu vermindern. Der Harnstoff der eingedüsten Lösung wird hier in der Abgasleitung selbst oder in einem ggf. in der Abgasleitung angeordneten Hydrolysekatalysator zu Ammoniak (NH₃) umgesetzt, das in einem nachgeschalteten SCR-Katalysator die Stickoxide (NOₓ) unter Bildung von Stickstoff (N₂) und Wasser (H₂O) reduziert. Die Zufuhr der Harnstoff-Wasser-Lösung erfolgt entweder mit Luftunterstützung durch ein in den Abgasstrom ragendes Dosierrohr oder mittels eines gekühlten Einspritzventils. In beiden Fällen lässt sich insbesondere bei geringen Abgasgeschwindigkeiten nicht vermeiden, dass ein Teil der Harnstoff-Wasser-Lösung auf die Wand der Abgasleitung trifft, was dort insbesondere bei niedrigen Abgas- oder Wandtemperaturen zur Bildung von Ablagerungen von Harnstoff oder Harnstoffreaktionsprodukten führt. In diesen Ablagerungen werden Harnstoff oder Harnstoffreaktionsprodukte gespeichert, die zu einem späteren Zeitpunkt in unerwünschter Weise wieder freigesetzt werden können und insbesondere bei einer transienten Betriebsweise des Motors einen reibungslosen optimierten Entstickungsprozess beeinträchtigen können. Die Ablagerung können außerdem zu einer Erhöhung des Strömungswiderstands der Abgasleitung und damit zu einer Beeinträchtigung der Abgasströmung führen.

Zum anderen wird zur nachmotorischen Erwärmung von Abgas von Verbrennungsmotoren Kraftstoff in das Abgas eingespritzt, um die zur Regeneration eines nachgeschalteten NOₓ-Katalysators oder Dieselpartikelfilters (DPF) erforderlichen Abgastemperaturen zu erreichen. Der Kraftstoff wird hier zumeist gezielt auf einen Wandabschnitt der Abgasleitung gespritzt, um den Kraftstoff durch den Kontakt mit der aufgeheizten Leitungswand schneller als allein durch Zufuhr in das heiße Abgas zu verdampfen. Da jedoch die Abgasleitung u.a. durch den Fahrtwind des Kraftfahrzeugs mehr oder weniger stark abgekühlt wird, kann nicht immer gewährleistet werden, dass die Wandtemperatur der Abgasleitung über den Siedetemperaturen der höhermolekularen Bestandteile der verwendeten handelsüblichen Kraftstoffe liegt.

### Vorteile der Erfindung

Das erfindungsgemäße Verfahren und die erfindungsgemäße Vorrichtung mit den im Anspruch 1 genannten Merkmalen bieten demgegenüber den Vorteil, dass die Temperatur des innerhalb der Abgasleitung angebrachten Prallblechs wegen geringerer Wärmeverluste im Allgemeinen höher als diejenige einer benachbarten Wand der Abgasleitung ist. Dies bewirkt auch eine schnellere Aufheizung der in den Abgasstrom gesprühten Substanz beim Auftreffen auf das in Sprührichtung der Sprüheinrichtung angeordnete Prallblech bzw. dessen der Sprüheinrichtung gegenüberliegende Prallfläche.

Bei einem Einsatz des Verfahrens und der Vorrichtung zur Eindüsung eines flüssigen oder festen Reduktionsmittels in den Abgasstrom hat sich gezeigt, dass diese beschleunigte Aufheizung des Reduktionsmittels und die im Falle eines SCR-Prozesses dadurch bewirkte schnellere Umsetzung des Harnstoffs in seine Folgeprodukte zu einer Verminderung der Ablagerungen in der Abgasleitung führt, wodurch eine unerwünschte Speicherung von Reduktionsmittel in derartigen Ablagerungen vermieden und eine Verbesserung der Dynamik und Umsätze bei Abgastests erreicht werden kann, bei denen insbesondere in USA und Japan viele Betriebspunkte im Bereich geringer Abgastemperaturen < 250°C liegen.

Bei einem Einsatz des Verfahrens und der Vorrichtung zur nachmotorischen Verbrennung durch Kraftstoffeinspritzung in das Abgas führt die beschleunigte Aufheizung des Kraftstoffs zu einer schnelleren Verdampfung und damit zu einer Beschleunigung der exothermen Oxidation des Kraftstoffs, durch die das Abgas zur Regeneration des Katalysators bzw. zum Abbrennen des Dieselpartikelfilters aufgeheizt wird. Zwecks weiterer Beschleunigung der Verdampfung kann es dabei von Vorteil sein, eine dünne Beschichtung aus einem porösen keramischen Werkstoff, einer Metallwolle oder einem anderen geeigneten Material auf das Prallblech aufzubringen, womit sich der Flächeninhalt der Prallfläche vergrößern lässt.

Allgemein gesprochen kann durch das erfindungsgemäße Prallblech die Geschwindigkeit eines Stoffumsatzes bzw. einer Änderung des Aggregatzustands der in den Abgasstrom zugeführten Substanz erhöht werden, was bei der nachfolgenden Abgasbehandlung häufig von Vorteil ist.

In der Erfindung ist vorgesehen, dass das Prallblech eine geringe Wärmekapazität aufweist, so dass es sich infolge seiner geringen thermischen Trägheit sehr schnell auf die Temperatur des Abgases aufheizt, und dass das Prallblech zur Befestigung in der Abgasleitung durch schlecht wärmeleitende Verbindungselemente mit deren Wand verbunden ist, so dass bei höheren Fahrgeschwindigkeiten und einer durch den Fahrtwind verursachten stärkeren Abkühlung der Wand nur wenig Wärme vom Prallblech an diese abgeführt wird.

Um die Vermischung der vom Prallblech abdampfenden Substanz mit dem am Prallblech vorbeiströmenden Abgas zu verbessern, sieht eine weitere vorteilhafte Ausgestaltung der Erfindung vor, dass das Abgas in Strömungsrichtung hinter dem Prallblech verwirbelt wird, vorzugsweise durch einen in Strömungsrichtung hinter der Prallfläche angeordneten statischen Mischer, der die Turbulenz des Abgasstroms hinter der Prallfläche verstärkt und somit dort für eine verbesserte Durchmischung des Abgasstroms sorgt.

Um für eine sichere Befestigung und eine definierte Lage des Prallblechs im Auspuffrohr und in Bezug zur Sprüheinrichtung zu sorgen, ist das Prallblech vorzugsweise derart röhrenförmig gebogen, dass es in einem geringen Abstand von der Wand der Abgasleitung koaxial in dieser montiert werden kann, und weist ein abgeschrägtes Stirnende auf, durch das die Substanz aus einer unter einem spitzen Winkel zur Strömungsrichtung des Abgases ausgerichteten Sprühdüse der Sprüheinrichtung auf eine der Sprühdüse gegenüberliegende Prallfläche auf der Innenseite des Prallblechs gesprüht werden kann.

Um eine kostengünstige Herstellung der Vorrichtung zu ermöglichen, wird das Prallblech bevorzugt zusammen mit den zur Befestigung in der Abgasleitung dienenden Verbindungselementen und zusammen mit dem zur Verwirbelung des Abgases dienenden statischen Mischer, soweit vorgesehen, als Stanz- und Biegeteil aus dünnem Metallblech geformt, das zur Vermeidung von Korrosion zum Beispiel aus nichtrostendem Stahl bestehen kann.

Die Erfindung wird nachfolgend in zwei Ausführungsbeispielen anhand der zugehörigen Zeichnungen näher erläutert. Es zeigen:
- Figur 1: eine Längsschnittansicht eines Teils eines Kraftfahr- zeugauspuffrohrs mit einer erfindungsgemäßen Vorrich- tung;
- Figur 2: eine Querschnittsansicht entlang der Linie II-II der Figur 1;

- Figur 3: eine Längsschnittansicht eines Teils eines Kraftfahr- zeugauspuffrohrs mit einer abgewandelten erfindungs- gemäßen Vorrichtung;
- Figur 4: eine Querschnittsansicht entlang der Linie IV-IV der Figur 3;
- Figur 5: eine Abwicklung eines Prallblechs der erfindungsge- mäßen Vorrichtung aus Figur 3 und 4.

### Beschreibung des Ausführungsbeispiels

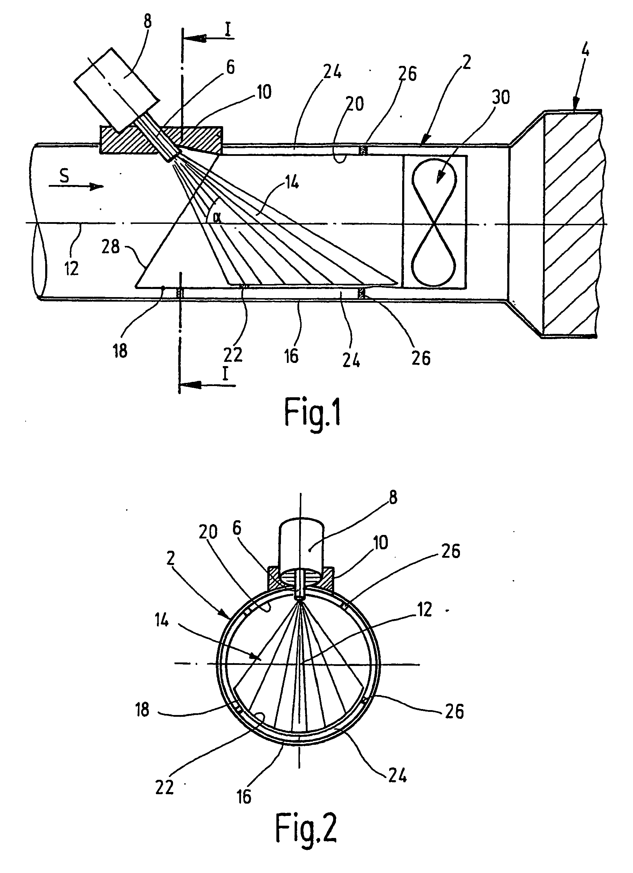

Figur 1 zeigt einen kurzen Abschnitt eines Abgas- oder Auspuffrohrs 2 eines Kraftfahrzeugs mit Dieselmotor zwischen dem letzteren (nicht dargestellt) und einem an der rechten Seite der Figur 1 noch teilweise dargestellten Katalysator 4, in welchem im Auspuffabgas enthaltene Stickoxide (NOₓ) durch Umsetzung mit Ammoniak (NH₃) unter Bildung von Stickstoff (N₂) und Wasser (H₂O) reduziert werden.

Zur Erzeugung des Ammoniaks, das zur Reduktion der Stickoxide im Katalysator 4 benötigt wird, wird in Strömungsrichtung vor dem Katalysator 4 in an sich bekannter Weise eine Harnstoff-Wasser-Lösung durch eine Sprühdüse 6 eines gekühlten Einspritz- oder Dosierventils 8 in das durch das Auspuffrohr 2 strömende Abgas gesprüht. Die Sprühdüse 6 wird von einem Adapter 10 gehalten, der in die zylindrische Wand des Auspuffrohrs 2 eingesetzt ist, und ist gegenüber der Längsachse 12 des Auspuffrohrs 2 geneigt, so dass ein aus der Sprühdüse 6 austretender konvergierender Sprühstrahl oder Sprühnebel 14 unter einem spitzen Winkel α zur Strömungsrichtung (Pfeil S) des Abgases in das Auspuffrohr 2 eintritt.

Um zu verhindern, dass der Sprühstrahl oder Sprühnebel 14 auf einen der Sprühdüse 6 gegenüberliegenden Abschnitt der während der Fahrt des Kraftfahrzeugs durch den Fahrtwind gekühlten Wand 16 des Auspuffrohrs 2 trifft, ist unmittelbar hinter der Sprühdüse 6 ein dünnes Prallblech 18 innerhalb des Auspuffrohrs 2 angebracht, das mit einem in Richtung der Sprühdüse 6 weisenden Teil seiner Innenseite 20 eine Prallfläche 22 für die bis zum Prallblech 18 gelangenden Tröpfchen des Sprühstrahls oder Sprühnebels 14 bildet.

Das Prallblech 18 besteht aus einem röhrenförmig gebogenen Metallblech das koaxial in das im Querschnitt kreisförmige Auspuffrohr 2 eingesetzt ist und einen im Vergleich zum Durchmesser des Auspuffrohrs 2 etwas kleineren Durchmesser aufweist, so dass zwischen der Wand 16 des Auspuffrohrs 2 und der Außenseite des Prallblechs 18 ein Ringspalt 24 mit einer Spaltweite von einigen Millimetern frei bleibt. Zur Befestigung des Prallblechs 18 dienen mehrere den Ringspalt 24 überbrückende Distanzfüße 26 aus einem schlecht wärmeleitenden Material, um die Wärmeabfuhr von dem vom heißen Abgas umströmten Prallblech 18 auf die vom Fahrtwind gekühlte Wand 16 des Auspuffrohrs 2 zu minimieren.

Das in Strömungsrichtung vordere, zur Sprühdüse 6 benachbarte Stirnende 28 des röhrenförmigen Prallblechs 18 ist abgeschrägt, wobei der längere Wandabschnitt mit der Prallfläche 22 der Sprühdüse 6 gegenüberliegt, so dass der aus der Sprühdüse 6 austretende Sprühstrahl oder Sprühnebel 14 durch das abgeschrägte Stirnende 28 des röhrenförmigen Prallblechs 18 hindurch auf die Prallfläche 22 trifft und diese mit der Harnstoff-Wasser-Lösung benetzt.

Die Materialstärke des Prallblechs 18 ist verhältnismäßig gering, d.h. geringer als die Stärke der Wand 16 des Auspuffrohrs 2, so dass es sich infolge seiner geringen Wärmekapazität und der schlechten Wärmeleitung der Distanzfüße 28 sehr schnell auf die Temperatur der heißen Auspuffgase aufheizt und anders als die von außen gekühlte Wand des Auspuffrohrs 2 diese Temperatur auch beibehält. Somit heizt sich auch die auf die Prallfläche 22 auftreffende Harnstoff-Wasser-Lösung schnell auf und dampft von der Prallfläche 22 ab, so dass sich selbst bei geringen Abgasgeschwindigkeiten und/oder niedrigen Abgastemperaturen hinter der Prallfläche 22 keine Ablagerungen von Harnstoff oder Reaktionsprodukten des Harnstoffs im Auspuffrohr 2 oder am Prallblech 18 bilden.

Wegen der geringen Materialstärke des Prallblechs 18 wird der Strömungswiderstand im Auspuffrohr 2 durch den Einbau des Prallblechs 18 nicht wesentlich vergrößert.

Um für eine bessere Durchmischung des von der Prallfläche 22 abgedampften Reduktionsmittels mit den Auspuffabgasen zu sorgen, kann fakultativ hinter der Prallfläche 22 ein in Figur 1 schematisch als Leitschaufel dargestellter statischer Mischer 30 angeordnet werden, der für eine intensive Verwirbelung des Reduktionsmittels mit dem Auspuffabgas sorgt.

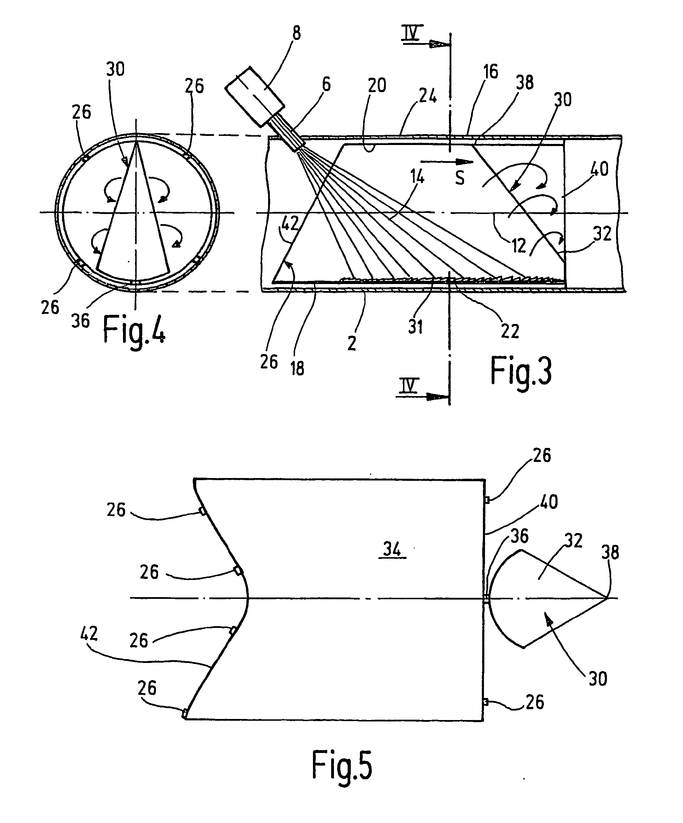

Die Figuren 3 bis 5 zeigen ein ähnliches Prallblech 18, das jedoch bei einer nachmotorischen Erwärmung eines Auspuffabgases zwecks Regeneration eines NOₓ-Speicherkatalysators oder eines Dieselpartikelfilters (nicht dargestellt) eingesetzt wird, wobei an Stelle der Harnstoff-Wasser-Lösung eine dosierte Menge Kraftstoff durch die Sprühdüse 6 in das Auspuffrohr 2 eingespritzt wird.

Das Prallblech 18 ist hier auf einem der Sprühdüse 6 zugewandten Teil seiner Innenseite 20 mit einer Beschichtung aus Metallwolle 31 versehen, durch die der Flächeninhalt dieser vom Sprühstrahl oder Sprühnebel 14 benetzten Prallfläche 22 vergrößert wird.

Außerdem ist der statische Mischer 30 hier einstückig mit dem Prallblech 18 ausgebildet, wobei er aus einem in Form eines Kreissektors 32 über den hinteren Rand eines Blechzuschnitts 34 des Prallblechs 18 überstehenden und durch eine dünne Materialbrücke 36 mit dem Zuschnitt 34 verbundenen Teil 32 des Blechs besteht, wie in Figur 5 dargestellt, der nach dem Biegen des Zuschnitts 34 zu einer Röhre nach innen in die Röhre hinein gebogen wird, wie am besten in Figur 3 und 4 dargestellt. Der umgebogene und mit seiner Spitze 38 an der Innenseite 20 des röhrenförmigen Prallblechs 18 fixierte Teil 32 des Blechs sorgt für eine gute Verwirbelung des Auspuffabgases beim Austritt aus dem Prallblech 18 und damit für eine gute Durchmischung dieses Abgases mit dem darin und auf der heißen Prallfläche 22 verdampften Kraftstoff. Auch die Distanzfüße 26 werden hier von Teilen des Prallblechs 18 gebildet, die in Form von schmalen Zungen über die beiden entgegengesetzten Stirnränder 40, 42 des Zuschnitts 34 überstehen.

## Patentansprüche

1. Vorrichtung zur Nachbehandlung eines Abgases einer Verbrennungsmaschine, mit einer Einrichtung zum dosierten Einsprühen einer mit dem Abgas zu vermischenden Substanz in eine vom Abgas durchströmte Abgasleitung und mit einem innerhalb der Abgasleitung (2) in Sprührichtung der Einrichtung (6, 8) angeordneten Prallblech (18), **dadurch gekennzeichnet, dass** die Materialstärke des Prallblechs geringer ist als die Wandstärke der Abgasleitung, so dass das Prallblech im Vergleich zur Abgasleitung eine geringe Wärmekapazität aufweist, und dass das Prallblech durch mindestens ein Verbindungselement mit der Abgasleitung verbunden ist, wobei die thermische Leitfähigkeit des Verbindungselements im Vergleich zur thermischen Leitfähigkeit der Abgasleitung gering ist.

2. Vorrichtung nach Anspruch 1, **dadurch gekennzeichnet, dass** das Prallblech (18) eine Prallfläche (22) aufweist, die einer Sprühdüse (6) der Einrichtung (6, 8) gegenüberliegt

3. Vorrichtung nach Anspruch 2, **dadurch gekennzeichnet, dass** das Prallblech (18) mindestens im Bereich der Prallfläche (22) mit einer den Flächeninhalt der Oberfläche vergibßernden Beschichtung (31) versehen ist.

4. Vorrichtung nach Anspruch 2 oder 3, **gekennzeichnet durch** einen in Strömungsrichtung hinter der Prallfläche (22) angeordneten statischen Mischer (30).

5. Vorrichtung nach Anspruch 4, **dadurch gekennzeichnet, dass** der Mischer (30) einstückig mit dem als Stanz- und Biegeteil hergestellten Prallblech (18) ausgebildet ist.

6. Vorrichtung nach einem der Ansprüche 1 bis 5, **dadurch gekennzeichnet, dass** das Prallblech (18) röhrenförmig ist.

7. Vorrichtung nach Anspruch 6, **dadurch gekennzeichnet, dass** eine Sprühdüse (6) der Einrichtung (6, 8 unter einem spritzen Winkel (α) zur Strömungsrichtung (S) des Abgases ausgerichtet ist und die Substanz durch ein abgeschrägtes Stirnende (28) des Prallblechs (18) auf eine der Sprühdüse (6) gegenüberliegende Prallfläche (22) sprüht.

## Claims

1. Apparatus for the aftertreatment of an exhaust gas of an internal combustion engine, having a device for the dosed spraying of a substance for mixing with the exhaust gas into an exhaust line through which exhaust gas flows, and having an impact plate (18) arranged within the exhaust line (2) in the spraying direction of the device (6, 8), **characterized in that** the material thickness of the impact plate is smaller than the wall thickness of the exhaust line, such that the impact plate has a lower heat capacity than the exhaust line, and **in that** the impact plate is connected to the exhaust line by means of at least one connecting element, with the thermal conductivity of the connecting element being low in relation to the thermal conductivity of the exhaust line.

2. Apparatus according to Claim 1, **characterized in that** the impact plate (18) has an impact surface (22) which is situated opposite a spray nozzle (6) of the device (6, 8).

3. Apparatus according to Claim 2, **characterized in that** the impact plate (18) is provided, at least in the region of the impact surface (22), with a coating (31) which enlarges the area of the surface.

4. Apparatus according to Claim 2 or 3, **characterized by** a static mixer (30) arranged downstream of the impact surface (22) in the flow direction.

5. Apparatus according to Claim 4, **characterized in that** the mixer (30) is formed in one piece with the impact plate (18) which is produced as a punched and bent part.

6. Apparatus according to one of Claims 1 to 5, **characterized in that** the impact plate (18) is tubular.

7. Apparatus according to Claim 6, **characterized in that** a spray nozzle (6) of the device (6, 8) is aligned at an acute angle (α) with respect to the flow direction (S) of the exhaust gas and sprays the substance through a sloping face end (28) of the impact plate (18) onto an impact surface (22) situated opposite the spray nozzle (6).

## Revendications

1. Dispositif de post-traitement de gaz d'échappement d'un moteur à combustion interne, comprenant un système de pulvérisation dosée d'une substance à mélanger au gaz d'échappement dans une conduite de gaz d'échappement parcourue par le gaz d'échappement, et une tôle d'impact (18) disposée à l'intérieur de la conduite de gaz d'échappement (2) dans le sens de la pulvérisation du système (6, 8), **caractérisé en ce que** l'épaisseur de matériau de la tôle d'impact est inférieure à l'épaisseur de la paroi de la conduite de gaz d'échappement, de sorte que la tôle d'impact présente, par comparaison avec la conduite de gaz d'échappement, une plus faible capacité thermique, et **en ce que** la tôle d'impact est connectée par au moins un élément de connexion à la conduite de gaz d'échappement, la conductivité thermique de l'élément de connexion étant inférieure à la conductivité thermique de la conduite de gaz d'échappement.

2. Dispositif selon la revendication 1, **caractérisé en ce que** la tôle d'impact (18) présente une surface d'impact (22) qui est en regard d'une buse de pulvérisation (6) du système (6, 8).

3. Dispositif selon la revendication 2, **caractérisé en ce que** la tôle d'impact (18) est pourvue au moins dans la région de la surface d'impact (22) d'un revêtement (31) augmentant la superficie de la surface.

4. Dispositif selon la revendication 2 ou 3, **caractérisé par** un mélangeur (30) statique disposé dans le sens de l'écoulement derrière la surface d'impact (22).

5. Dispositif selon la revendication 4, **caractérisé en ce que** le mélangeur (30) est réalisé d'une seule pièce avec la tôle d'impact (18) fabriquée sous forme de pièce pliée et estampée.

6. Dispositif selon l'une quelconque des revendications 1 à 5, **caractérisé en ce que** la tôle d'impact (18) est de forme tubulaire.

7. Dispositif selon la revendication 6, **caractérisé en ce qu'**une buse de pulvérisation (6) du système (6, 8) est orientée suivant un angle aigu (α) par rapport au sens d'écoulement (S) du gaz d'échappement et pulvérise la substance à travers une extrémité frontale biseautée (28) de la tôle d'impact (18) sur une surface d'impact (22) en regard de la buse de pulvérisation (6).
